# EUROPEAN PATENT SPECIFICATION

(11) **EP 0 758 849 B1**
(45) Date of publication and mention of the grant of the patent: **07.03.2007**
(21) Application number: 95917095.2
(22) Date of filing: 21.04.1995
(51) Int. Cl.: A23G 4/00

(54) **METHOD FOR CREATING A CHEWING GUM INCLUDING A LIQUID SORBITOL/MANNITOL/GLYCERIN BLEND**
VERFAHREN ZUR HERSTELLUNG VON KAUGUMMI MIT EINEM FLÜSSIGEM SORBIT/MANNIT/GLYCERIN GEMISCH
PROCEDE DE FABRICATION DE CHEWING-GUM CONTENANT UN MELANGE DE SORBITOL LIQUIDE/MANNITOL/GLYCERINE

(30) Priority: 06.05.1994 US 239137
(43) Date of publication of application: 26.02.1997
(60) Divisional application: 06021989.6
(73) Proprietor: WM. WRIGLEY JR. COMPANY, Chicago, Illinois 60611 (US)
(72) Inventor: MAZUREK, Pamela M., Orland Park, IL (US); REED, Michael A., Merriville, IN (US)
(74) Representative: Hayes, Adrian Chetwynd
(86) International application number: PCT/US1995/004889
(87) International publication number: WO 1995/030338

(56) References cited:
- WO-A-95/17829
- WO-A1-92/08368
- WO-A2-90/13994
- WO-A2-92/08370
- US-A- 4 271 197
- US-A- 4 514 422
- US-A- 4 671 961
- US-A- 4 728 515
- US-A- 4 803 082
- US-A- 4 834 986
- US-A- 5 120 551
- US-A- 5 320 854

## Description

### BACKGROUND OF THE INVENTION

This application is a continuation-in-part of U.S. Patent Application No. 5,651,936, filed on December 29, 1993 and entitled "Liquid Sorbitol/Mannitol/Glycerin Blend and Compositions Containing Same."

The present invention relates generally to chewing gums. More specifically, the present invention relates to chewing gums including sorbitol.

It is known to provide alditols, such as sorbitol, mannitol, and xylitol in chewing gums. Alditols can be used in chewing gum, as well as other confectioneries and food products as a "sugar substitute." These sugar substitutes have the advantage that they are not fermented in the mouth of the consumer to form products that can attack dental enamel. Therefore, sorbitol, as well as other alditols, is used in sugarless products. Additionally, sorbitol can be used as a bulking agent.

A number of patents have disclosed and discussed the use of various compositions including sorbitol. These include U.S. Patent Nos.: 4,156,740; 4,252,829; 4,466,983; 4,614,654; 4,671,961; 4,728,515; 5,120,551; and 5,144,024.

Sorbitol can be provided in chewing gum in its crystalline form. It is believed that crystalline sorbitol currently accounts for approximately 50% of all sugar-free chewing gum formulations. Unfortunately, crystalline sorbitol is costly. Although it would be desirable to have a replacement for crystalline sorbitol, heretofore, such possible replacements were not as effective, created product stability problems, created processability issues, were even more expensive than crystalline sorbitol, and/or could not be used with certain formulations.

In this regard, aqueous sorbitol has been explored for use in chewing gum. Aqueous sorbitol is a less expensive alternative than crystalline sorbitol. Unfortunately, the use of aqueous sorbitol in chewing gum at levels above 15% can create problems with respect to product stability. Likewise, the use of aqueous sorbitol at levels above 15% can also create processability problems. This is due, it is believed, to the water content contained in the aqueous sorbitol.

Additionally, there are problems with respect to at least certain chewing gum formulations when using liquid sorbitol. Because aqueous sorbitol contains 30% water, it is detrimental to moisture sensitive ingredients when provided at high levels in chewing gum. A further difficulty with aqueous sorbitol is that it readily crystallizes and causes the gum to become brittle.

There is therefore a need for an improved method that allows sorbitol to be added to a chewing gum formulation in a non-crystalline state.

### SUMMARY OF THE INVENTION

The present invention provides a method for creating chewing gum comprising the step of:
adding to a water insoluble base a syrup of coevaporated aqueous sorbitol, mannitol and glycerin and a flavour, the syrup comprising from 25% to 45% of a total mixture that is used to create the chewing gum, the syrup being created by the coevaporation of a solution that comprises prior to coevaporation from 52% to 72% by weight aqueous sorbitol, from 3% to 7% by weight mannitol, and from 25% to 45% by weight glycerin; and a lycasin/glycerin mixture.

An advantage of the present invention is that it provides an improved chewing gum formulation.

Moreover, an advantage of the present invention is that it provides an improved sugarless chewing gum formulation.

Furthermore, an advantage of the present invention is that it provides an improved method for creating chewing gum.

Further, an advantage of the present invention is that it provides a method for adding sorbitol to chewing gum in a state other than a crystalline state.

Still further, an advantage of the present invention is that it provides a more cost effective method of adding sorbitol to a chewing gum composition.

Another advantage of the present invention is that it allows greater levels of sorbitol to be added to chewing gum in a non=crystalline form than heretofore practical from a commercial standpoint.

Additional features and advantages of the present invention are described in, and will be apparent from, the detailed description of the presently preferred embodiments.

### DETAILED DESCRIPTION OF THE PRESENTLY PREFERRED EMBODIMENTS

The present invention provides an improved chewing gum formulation and method of making chewing gum. Pursuant to the present invention, sorbitol is provided in a non-crystalline state at levels that the inventors believe were not heretofore commercially possible utilizing liquid sorbitol in chewing gum formulations.

Sorbitol is a sugarless sweetener that is added to a variety of products. These products include food stuffs, beverages, medicaments, confectioneries, and chewing gum. Sorbitol can be added either alone, without other sugarless sweeteners, for example, in sugar-free chewing gum, or in combination with sugar sweeteners. Additionally, the sorbitol can be provided in, for example, the chewing gum entirely in the syrup form of the present invention or along with a crystalline form of sorbitol.

Pursuant to the present invention, the sorbitol is added to other components of a chewing gum formulation, as a blend of aqueous sorbitol, mannitol, and glycerin. The blend of aqueous sorbitol, mannitol, and glycerin is provided as a syrup. To this end, a blend of aqueous sorbitol and crystallization modifiers is provided. This blend can be used to reduce the usage of crystalline sorbitol in standard product formulations. It has been found that the resultant product, including the sorbitol composition of the present invention, exhibits increased binding capacity over currently used binders in sugar-free gum.

Preferably, the syrup includes on a dry weight basis not including any water that may be present: approximately 40 to about 70% sorbitol; approximately 24 to about 56% glycerin; and approximately 4 to about 9% mannitol. In a preferred embodiment, the syrup includes on a dry weight basis not including water that may be present: approximately 47 to about 65% sorbitol; approximately 28 to about 45% glycerin; and approximately 5 to about 7% mannitol. Prior to any evaporation of the syrup, the syrup will contain approximately 20% water. At least some of the water will be driven off through evaporation or other means.

In an embodiment, to provide the aqueous sorbitol of the present invention, aqueous sorbitol, mannitol, and glycerin are added together and then coevaporated to create a syrup. Preferably, the aqueous sorbitol, mannitol, and glycerin combination is evaporated so that it contains not more than 10% water. Most preferably, the aqueous sorbitol, glycerin, and mannitol is evaporated so that it contains no more than 7% water.

In another embodiment, the syrup blend is made by hydrolyzing sucrose to dextrose and fructose. The dextrose and fructose are then hydrogenated to sorbitol and mannitol. The result will be a syrup containing sorbitol and mannitol. Glycerin can be added and the whole mixture can be coevaporated to drive off the water.

The aqueous sorbitol, glycerin, and mannitol can be provided in different combinations and ratios. In this regard, prior to evaporation: the aqueous sorbitol comprises 52 to about 72% by weight of the combination; mannitol comprises 3 to about 7% by weight of the combination; and glycerin comprises 25 to about 45% by weight of the combination. In a most preferred embodiment, prior to evaporation: the aqueous sorbitol comprises 60 to 70% by weight of the combination; mannitol comprises 5 to 6% by weight of the combination; and glycerin comprises 25 to 35% by weight of the combination. In an embodiment that has been found to function satisfactorily, prior to evaporation the aqueous sorbitol comprises approximately 65% of the combination, glycerin approximately 30%, and mannitol approximately 5%. The syrup will include on a dry weight basis not including the water present 56.5% sorbitol, 37.3% glycerin, and 6.2% mannitol.

Pursuant to the present invention, the aqueous sorbitol syrup can be used to create sugarless chewing gums; because sugarless chewing gum typically contains sorbitol. However, it should be noted that the present invention can be used to create any chewing gum that includes sorbitol. Likewise, aqueous sorbitol syrup can be used in any product that uses sorbitol. Such products include confectioneries, medicaments, beverages, and food products.

Chewing gum generally consists of a water insoluble gum base, a water soluble portion, and flavors. The water soluble portion dissipates with a portion of the flavor over a period of time during chewing. The gum base portion is retained in the mouth throughout the chew.

The insoluble gum base generally comprises elastomers, resins, fats and oils, softeners, and inorganic fillers. The gum base may or may not include wax. The insoluble gum base can constitute 5 to 95 percent, by weight, of the chewing gum, more commonly, the gum base comprises 10 to 50 percent of the gum, and in some preferred embodiments, 20 to 35 percent, by weight, of the chewing gum.

In an embodiment, the chewing gum base of the present invention contains 20 to 60 weight percent synthetic elastomer, 0 to 30 weight percent natural elastomer, 5 to 55 weight percent elastomer plasticizer, 4 to 35 weight percent filler, 5 to 35 weight percent softener, and optional minor amounts (about one percent or less) of miscellaneous ingredients such as colorants, antioxidants, etc.

Synthetic elastomers may include, but are not limited to, polyisobutylene with a GPC weight average molecular weight of 10,000 to 95,000, isobutylene-isoprene copolymer (butyl elastomer), styrene-butadiene copolymers having styrene-butadiene ratios of 1:3 to 3:1, polyvinyl acetate having a GPC weight average molecular weight of 2,000 to 90,000, polyisoprene, polyethylene, vinyl acetate-vinyl laurate copolymer having vinyl laurate content of 5 to 50 percent by weight of the copolymer, and combinations thereof.

Preferred ranges are, for polyisobutylene, 50,000 to 80,000 GPC weight average molecular weight, for styrene-butadiene, 1:1 to 1:3 bound styrene-butadiene, for polyvinyl acetate, 10,000 to 65,000 GPC weight average molecular weight with the higher molecular weight polyvinyl acetates typically used in bubble gum base, and for vinyl acetate-vinyl laurate, vinyl laurate content of 10-45 percent.

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof. The preferred synthetic elastomer and natural elastomer concentrations vary depending on whether the chewing gum in which the base is used is adhesive or conventional, bubble gum or regular gum, as discussed below. Preferred natural elastomers include jelutong, chicle, sorva and massaranduba balata.

Elastomer plasticizers may include, but are not limited to, natural rosin esters such as glycerol esters of partially hydrogenated rosin, glycerol esters polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing. the preferred elastomer plasticizers will also vary depending on the specific application, and on the type of elastomer which is used.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Softeners/emulsifiers may include tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids (e.g. stearic, palmitic, oleic and linoleic acids), and combinations thereof.

Colorants and whiteners may include FD&C-type dyes and lakes, fruit and vegetable extracts, titanium dioxide, and combinations thereof.

The base may or may not include wax. An example of a wax-free gum base is disclosed in U.S. Patent No. 5,286,500, the disclosure of which is incorporated herein by reference.

In addition to a water insoluble gum base portion, a typical chewing gum composition includes a water soluble bulk portion and one or more flavoring agents. The water soluble portion can include bulk sweeteners, high intensity sweeteners, flavoring agents, softeners, emulsifiers, colors, acidulants, fillers, antioxidants, and other components that provide desired attributes.

Softeners are added to the chewing gum in order to optimize the chewability and mouth feel of the gum. The softeners, which are also known as plasticizers and plasticizing agents, generally constitute between 0.5 to 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum. Additionally, the sorbitol/mannitol/glycerin syrup of the present invention can be used as a softener and binding agent.

Bulk sweeteners include both sugar and sugarless components. Bulk sweeteners typically constitute 5 to 95% by weight of the chewing gum, more typically, 20 to 80% by weight, and more commonly, 30 to 60% by weight of the gum.

Sugar sweeteners generally include saccharide-containing components commonly known in the chewing gum art, including, but not limited to, sucrose, dextrose, maltose, dextrin, dried invert sugar, fructose, levulose, galactose, corn syrup solids, and the like, alone or in combination.

Sorbitol can be used as a sugarless sweetener. Preferably, the sorbitol syrup of the present invention comprises approximately 25% to 45% by weight of the chewing gum composition. As noted above, in addition to the sorbitol syrup of the present invention, crystalline sorbitol, if desired, can also be used. Additionally, sugarless sweeteners can include, but are not limited to, other sugar alcohols such as mannitol, xylitol, hydrogenated starch hydrolysates, maltitol, and the like, alone or in combination.

High intensity artificial sweeteners can also be used in combination with the above. Preferred sweeteners include, but are not limited to sucralose, aspartame, salts of acesulfame, alitame, saccharin and its salts, cyclamic acid and its salts, glycyrrhizin, dihydrochalcones, thaumatin, monellin, and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extension may be used to achieve the desired release characteristics.

Usage level of the artificial sweetener will vary greatly and will depend on such factors as potency of the sweetener, rate of release, desired sweetness of the product, level and type of flavor used and cost considerations. Thus, the active level of artificial sweetener may vary from 0.02 to about 8%. When carriers used for encapsulation are included, the usage level of the encapsulated sweetener will be proportionately higher.

Combinations of sugar and/or sugarless sweeteners may be used in chewing gum. Additionally, the softener may also provide additional sweetness such as with aqueous sugar or alditol solutions.

If a low calorie gum is desired, a low caloric bulking agent can be used. Example of low caloric bulking agents include: polydextrose; Raftilose, Raftilin; Fructooligosaccharides (NutraFlora^{®}); Palatinose oligosaccharide; Guar Gum Hydrolysate (Sun Fiber^{®}); or indigestible dextrin (Fibersol^{®}). However, other low calorie bulking agents can be used.

A variety of flavoring agents can be used. The flavor can be used in amounts of approximately 0.1 to about 15 weight percent of the gum, and preferably, about 0.2 to about 5%. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion.

By way of example and not limitation, examples of chewing gum formulations constructed pursuant to the present invention are as follows:

**TABLE 1**

| | Ex. 1 | Ex. 2 | Ex. 3 | Ex. 4 |
|---|---|---|---|---|
| Sugarless Syrup Blend * | 40 | 35 | 30 | 25 |
| Crystalline Sorbitol | 8.6 | 13.6 | 18.6 | 23.6 |
| Glycerin | 9.88 | 9.88 | 9.88 | 9.88 |
| Gum Base | 23.2 | 23.2 | 23.2 | 23.2 |
| Mannitol | 4.77 | 4.77 | 4.77 | 4.77 |
| Talc | 2.0 | 2.0 | 2.0 | 2.0 |
| Flavor | 1.65 | 1.65 | 1.65 | 1.65 |
| Encapsulated Aspartame | 0.34 | 0.34 | 0.34 | 0.34 |
| Spray Dried Peppermint Flavor | 0.25 | 0.25 | 0.25 | 0.25 |
| Coevaporated Lycasin^{®}/Glycerin | 9.31 | 9.31 | 9.31 | 9.31 |

| | | | | |
|---|---|---|---|---|
| * created by evaporating a mixture of 65% liquid sorbitol. 30% glycerin, and 5% mannitol to 98% solids. | | | | |

The present invention, it is believed, can be used with a variety of processes for manufacturing chewing gum.

Chewing gum is generally manufactured by sequentially adding the various chewing gum ingredients to commercially available mixers known in the art. After the ingredients have been thoroughly mixed, the chewing gum mass is discharged from the mixer and shaped into the desired form, such as by rolling into sheets and cutting into sticks, extruding into chunks, or casting into pellets.

Generally, the ingredients are mixed by first melting the gum base and adding it to the running mixer. The gum base may alternatively be melted in the mixer. Color and emulsifiers can be added at this time.

The sorbitol syrup of the present invention can be added next along with any other syrup softeners or bulking agents and part of the bulk portion. Further, parts of the bulk portion may then be added to the mixer. Flavoring agents are typically added with the final part of the bulk portion. The entire mixing process typically takes from 5 to 15 minutes, although longer mixing times are sometimes required. Those skilled in the art will recognize that variations of this general mixing procedure, or other mixing procedures, can be followed.

By way of example, and not limitation, further examples of the present invention will now be set forth.

### EXAMPLE 5-10

Other food items in which 98% sorbitol syrup may be used as a non-cariogenic bulking agent are:
1. Confections and frostings.
2. Dressings for salads.
3. Frozen dairy deserts and mixes.
4. Gelatins, puddings and fillings.
5. Hard candy.
6. Soft candy.
7. Baked goods and baking mixes.

## Claims

1. A method for creating chewing gum comprising the step of:
adding to a water insoluble base a syrup of coevaporated aqueous sorbitol, mannitol and glycerin and a flavour, the syrup comprising from 25% to 45% of a total mixture that is used to create the chewing gum, the syrup being created by the coevaporation of a solution that comprises prior to coevaporation from 52% to 72% by weight aqueous sorbitol, from 3% to 7% by weight mannitol, and from 25% to 45% by weight glycerin; and a lycasin^{®}/glycerin mixture.

2. A method as claimed in claim 1 wherein the syrup comprises not more than 10% water.

3. A method as claimed in claim 1 wherein the syrup comprises not more than 3% water.

4. A method as claimed in any one of claims 1 to 3 wherein the sorbitol comprises a crystalline form of sorbitol.

5. A method as claimed in any one of claims 1 to 4 wherein the chewing gum is sugar-free.

6. A method as claimed in any one of claims 1 to 5 wherein the water insoluble gum base is wax-free.

7. A method as claimed in any one of claims 1 to 6 wherein the chewing gum includes artificial sweeteners.

8. A method as claimed in any one of claims 1 to 7 wherein the syrup includes on a dry weight basis, not including any water that may be present:
from 40% to 70% by weight sorbitol;
from 24% to 56% by weight glycerin; and
from 4% to 9% by weight mannitol.

9. A method as claimed in any one of claims 1 to 7 wherein the syrup includes on a dry weight basis not including any water that may be present:
from 47% to 65% by weight sorbitol;
from 28% to 45% by weight glycerin; and
from 5% to 7% by weight mannitol.

## Patentansprüche

1. Verfahren zur Herstellung von Kaugummi, umfassend die Schritte:
Beimengung eines Sirups aus coevaporiertem wässrigem Sorbitol, Manitol und Glyzerin und einem Geschmacksstoff sowie eines Lycasin®/Glyzerin-Gemisches zu einer wasserunlöslichen Base, wobei der Sirup 25 % bis 45 % eines zur Herstellung des Kaugummis verwendeten Gesamtgemisches umfasst und der Sirup durch Coevaporation einer Lösung hergestellt wird, die vor der Coevaporation 52 Gew.-% bis 72 Gew.-% wässriges Sorbitol, 3 Gew.-% bis 7 Gew.-% Mannitol und 25 Gew.-% bis 45 Gew.-% Glyzerin umfasst.

2. Verfahren nach Anspruch 1, wobei der Sirup nicht mehr als 10 % Wasser umfasst.

3. Verfahren nach Anspruch 1, wobei der Sirup nicht mehr als 3 % Wasser umfasst.

4. Verfahren nach einem der Ansprüche 1 bis 3, wobei das Sorbitol eine kristalline Form von Sorbitol umfasst.

5. Verfahren nach einem der Ansprüche 1 bis 4, wobei der Kaugummi zuckerfrei ist.

6. Verfahren nach einem der Ansprüche 1 bis 5, wobei die wasserunlösliche KaugummiBase wachsfrei ist.

7. Verfahren nach einem der Ansprüche 1 bis 6, wobei der Kaugummi künstliche Süßstoffe umfasst.

8. Verfahren nach einem der Ansprüche 1 bis 7, wobei der Sirup auf der Basis des Trockengewichts unter Ausschluss von möglicherweise vorhandenem Wasser umfasst:
40 Gew.-% bis 70 Gew.-% Sorbitol,
24 Gew.-% bis 56 Gew.-% Glyzerin und
4 Gew.-% bis 9 Gew.-% Mannitol.

9. Verfahren nach einem der Ansprüche 1 bis 7, wobei der Sirup auf der Basis des Trockengewichts unter Ausschluss von möglicherweise vorhandenem Wasser umfasst:
47 Gew.-% bis 65 Gew.-% Sorbitol,
28 Gew.-% bis 45 Gew.-% Glyzerin und
5 Gew.-% bis 7 Gew.-% Mannitol.

## Revendications

1. Procédé de production de gomme à mâcher comprenant l'étape qui consiste :
à additioner à une base insoluble dans l'eau un sirop obtenu par coévaporation de sorbitol aqueux, de mannitol et de glycérol et un arôme, le sirop constituant 25 % à 45 % d'un mélange total qui est utilisé pour produire la gomme à mâcher, le sirop étant produit par la coévaporation d'une solution qui comprend, avant la coévaporation, 52 % à 72 % en poids de sorbitol aqueux, 3 % à 7 % en poids de mannitol et 25 % à 45 % en poids de glycérol ; et d'un mélange lycasin^{®}/glycérol.

2. Procédé selon la revendication 1, dans lequel le sirop ne comprend pas plus de 10 % d'eau.

3. Procédé selon la revendication 1, dans lequel le sirop ne comprend pas plus de 3 % d'eau.

4. Procédé selon l'une quelconque des revendications 1 à 3, dans lequel le sorbitol comprend une forme cristalline de sorbitol.

5. Procédé selon l'une quelconque des revendications 1 à 4, dans lequel la gomme à mâcher est sans sucre.

6. Procédé selon l'une quelconque des revendications 1 à 5, dans lequel la base de gomme insoluble dans l'eau est sans cire.

7. Procédé selon l'une quelconque des revendications 1 à 6, dans lequel la gomme à mâcher comprend des édulcorants artificiels.

8. Procédé selon l'une quelconque des revendications 1 à 7, dans lequel le sirop comprend, sur une base en poids sec, à l'exclusion de toute eau pouvant être présente :
40 % à 70 % en poids de sorbitol ;
24 % à 56 % en poids de glycérol ; et
4 % à 9 % en poids de mannitol.

9. Procédé selon l'une quelconque des revendications 1 à 7, dans lequel le sirop comprend, sur une base en poids sec, excluant toute eau pouvant être présente :
47 % à 65 % en poids de sorbitol ;
28 % à 45 % en poids de glycérol ; et
5 % à 7 % en poids de mannitol.
